(19) Europäisches Patentamt
European Patent Office
Office européen des brevets

(11) Veröffentlichungsnummer: **0 014 236**
**B1**

(12) # EUROPÄISCHE PATENTSCHRIFT

(45) Veröffentlichungstag der Patentschrift: **25.08.82**

(51) Int. Cl.³: **B 24 D 3/00**; C 09 K 3/14

(21) Anmeldenummer: **79104569.3**

(22) Anmeldetag: **19.11.79**

(54) **Verfahren zur Gütebehandlung von Schleifkorn.**

(30) Priorität: **07.02.79 AT 901/79**

(43) Veröffentlichungstag der Anmeldung: **20.08.80 Patentblatt 80/17**

(45) Bekanntmachung des Hinweises auf die Patenterteilung: **25.08.82 Patentblatt 82/34**

(84) Benannte Vertragsstaaten: **CH DE FR GB IT NL SE**

(56) Entgegenhaltungen:
**DE-A-1 923 562**
**DE-A-2 723 036**
**DE-B-1 167 725**
**DE-U-7 328 515**
**US-A-3 269 815**
**US-A-3 615 308**

(73) Patentinhaber: **Tyrolit Schleifmittelwerke Swarovski K.G., Swarovskistrasse 33, A-6130 Schwaz (AT)**

(72) Erfinder: **Helletsberger, Harald, Dr., Boznerstrasse 13, A-6112 Wattens (AT)**
Erfinder: **Aichhorn, Anton, Dr., Fischzuchtweg 1, A-6065 Thaur (AT)**
Erfinder: **Bogusch, Erich, Dr., Paracelsusstrasse 9, A-6130 Schwaz (AT)**

(74) Vertreter: **Torggler, Paul, Dr. et al, Patentanwälte Dr. Paul Torggler Dr. Engelbert Hofinger Wilhelm-Greil-Strasse 16, A-6020 Innsbruck (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 014 236 B1

BUNDESDRUCKEREI BERLIN

# Verfahren zur Gütebehandlung von Schleifkorn

Die Erfindung bezieht sich auf ein Verfahren zur Gütebehandlung von Schleifkorn aus $Al_2O_3$ mit einem Anteil von Titanoxid, vorzugsweise $Ti_2O_3$, wobei auf das Schleifkorn eine Ummantelung aus einer keramischen Masse aufgeschmolzen und/oder aufgesintert wird.

Die Erfindung bezieht sich auf die Behandlung von konventionellem Schleifkorn aus geschmolzenem oder gesintertem Elektrokorund, wie es handelsüblich als Normalkorund oder mikrokristalliner Korund bezeichnet wird, das einen Gehalt von 0,5 bis 5,0 Gew.-% Titanoxide ($Ti_2O_3$ und $TiO_2$) aufweist, wobei der Hauptanteil $Ti_2O_3$ ist.

Korund, der als Schleifmittel in Schleifscheiben oder Schleifkörpern Verwendung finden soll, wird nach herkömmlicher Praxis fallweise bei einer Temperatur von ca. 1350°C geglüht, wodurch eine Änderung der Kornstruktur und eine Verbesserung der Schleifeigenschaften erzielt wird. Sichtbar wird diese Behandlung durch die blaue Farbe, die der Korund bei dieser Behandlung annimmt.

Weiters ist es bekannt, Korundkörner mit einer Ummantelung zu versehen, beispielsweise aus keramischen Massen und Eisendioxiden, die eine Verbesserung der Haftung zwischen Schleifkorn und Bindung in der Schleifscheibe bzw. im Schleifkörper mit sich bringt bzw. die Füllstoffeigenschaften aufweist und aktiv am Schleifvorgang Anteil nimmt, indem sie beispielsweise die Wärmeableitung verbessert.

Nach dem herkömmlichen Verfahren werden das Glühen des Schleifkorns und das Ummanteln des Schleifkorns getrennt durchgeführt, d. h., das Schleifkorn wird vorerst auf eine Temperatur von ca. 1350°C gebracht, und zwar in oxidierender Atmosphäre, bis es eine Blaufärbung erhalten hat, worauf dann das Schleifkorn wieder auf Raumtemperatur abgekühlt wird. Nach der Abkühlung wird, wie gesagt, in einem separaten Arbeitsvorgang eine keramische Umhüllung auf Phosphat- oder Silikatbasis beispielsweise mit niedrig schmelzenden, keramischen Fritten (Glasfritten) und fein vermahlenen Metalloxiden — aus Kostengründen vornehmlich $Fe_2O_3$ — aufgetragen, wozu das Schleifkorn nochmals auf eine Temperatur von ca. 600°C bis 800°C aufgeheizt wird.

Die dabei erzielte Ummantelung bewirkt durch ihre rauhe, körnige Oberflächenstruktur eine größere Oberfläche und eine bessere Benetzbarkeit derselben. Der Kunstharzbindung des Schleifkörpers steht somit eine vergrößerte und verbesserte Haftfläche zur Verfügung, wogegen die Haftung zwischen Schleifkorn und Mantel häufig nicht die erforderliche Intensität aufweist. Wird ein derart behandeltes Schleifkorn in Schleifkörpern eingesetzt, so kommt es besonders bei Schleifscheiben hoher Dichte zu starken Ausbrüchen von schleiftechnisch nicht oder nur unzureichend genütztem Schleifkorn. Eine weitere Ursache des Korn-Ausbruchs stellt der poröse und relativ dicke (15–50 µm) Mantel selbst dar, der nur geringe Festigkeit besitzt. Die Flüssig-Komponente der Kunstharzbindung kann den dicken Mantel nicht immer zur Gänze, d. h. bis auf seinen Grund, durchtränken, wodurch bei nachfolgender Beanspruchung der poröse Mantel selbst eine bevorzugte Bruchzone darstellt. Es kann also selbst bei guter Haftung des Mantels zu Korn und Bindung dieser selbst auseinanderreißen, wobei ein Teil des Mantels am Korn und der andere Teil als Gegenstück an der Bindungsmasse des Schleifkörpers haften bleibt.

Der obenerwähnte Glühprozeß, d. h., das Aufheizen des Korns auf eine Temperatur von ca. 1350°C, ändert das Bruchverhalten und die Festigkeitseigenschaften des Schleifkorns und erhöht die Schleifleistung des fertigen Schleifwerkzeugs, außerdem gewährleistet es einen kühleren Schliff. Die Ursachen des Farbumschlags von braun auf blau und der veränderten mechanischen Eigenschaften sind im Übergang des Titans, welches im gegenständlichen Schleifkorn in Form von Oxiden (vornehmlich $Ti_2O_3$) mit maximal 5 Gew.-% enthalten ist, von der 3-wertigen in die 4-wertige Oxidationsstufe zu sehen. Diese Erhöhung der Oxidationsstufe von $Ti^{3+}$ zu $Ti^{4+}$ bewirkt die »Ausfällung« des im $Al_2O_3$ »gelösten« $Ti_2O_3$ als $TiO_2$.

Aufgabe der Erfindung ist es, ein Verfahren zu schaffen, welches es ermöglicht, den die Umwandlung der Kornstruktur bewirkenden Glühprozeß und das Ummanteln des Korns mit einer beispielsweise haftverbessernden Schicht in einem Arbeitsgang und mit geringerem Energieverbrauch durchzuführen.

Dies wird erfindungsgemäß dadurch erreicht, daß das Schleifkorn über eine Zeitspanne von 15 min bis 2 h einer Temperatur von 1250 bis 1350°C ausgesetzt wird, wobei das Aufsintern bzw. Aufschmelzen der keramischen Ummantelung gleichzeitig mit der Umwandlung der Ti-Oxide von der 3-wertigen in die 4-wertige Oxidationsstufe und damit mit der Umwandlung der Kornstruktur erfolgt.

Das nach dem erfindungsgemäßen Verfahren behandelte Schleifkorn weist eine Umhüllung von nur 2–5 µm Stärke auf, welche sich aufgrund der Ausbildung einer beispielsweise aus Spinell bestehenden Übergangsschicht durch eine außerordentlich starke Haftung an der Korn-Oberfläche und hohe innere Festigkeit auszeichnet. Abgesehen von der Energie-Ersparnis gegenüber dem herkömmlichen Verfahren besteht der entscheidende Fortschritt der erfindungsgemäß aufgebrachten Ummantelung in deren außergewöhnlicher Haftung am Korn, hohen inneren Festigkeit und geringen Dicke.

Vorteilhaft ist vorgesehen, daß die Zeitspanne der Temperaturbehandlung zwischen 20 min und 45 min liegt.

Vorteilhaft ist vorgesehen, daß als Ummantelungsmaterial Silikate, Ton, Kaolin und/oder hochschmelzende Glasfritten Verwendung finden.

Ein weiteres vorteilhaftes Ausführungsbeispiel des Verfahrens sieht vor, daß dem Ummantelungsmaterial Metalloxide, beispielsweise Eisenoxide und/oder Manganoxid und/oder Chromoxide beigegeben werden bzw. in diesem enthalten sind.

Durch den gezielten Einsatz von Metalloxiden kommt es bei der Brenntemperatur von 1250 bis 1350°C zu einer Abspaltung von Sauerstoff nach dem Beispiel

$$MeO_2 \longrightarrow MeO + \frac{1}{2} O_2$$

Da diese Sauerstoffabgabe jeweils unmittelbar an der Kornoberfläche stattfindet, trägt der frei werdende Sauerstoff zu einer erheblichen Beschleunigung der Oxidation des 3-wertigen Titans bei. Dieses zusätzliche Sauerstoffangebot gestattet eine Kürzung der Brandzeit um bis zu 50% gegenüber dem konventionellen Glühverfahren.

Vorteilhaft ist vorgesehen, daß der Anteil der Metalloxide ca. 1 – 5 Gew.-%, bezogen auf die Menge Schleifkorn, beträgt.

Ein weiteres Ausführungsbeispiel der Erfindung sieht vor, daß dem Ummantelungsmaterial Substanzen mit einem Ausdehnungskoeffizienten, der von dem der keramischen Masse (und dem Schleifkorn) möglichst stark abweicht, wie beispielsweise $ZrO_2$, beigegeben werden.

Durch den Zusatz von beispielsweise Zirkonkorund, welches während der Abkühlung nach dem Brand durch seine starke thermische Volumsänderung (Ausdehnung bzw. Kontraktion) ein feines Netz von Mikrorissen erzeugt, wird eine größere Oberfläche der Ummantelung und eine Erhöhung der Zug- und Biegefestigkeit der Ummantelung und damit fallweise des Schleifkorns erzielt, indem diese Mikrorisse die Bildung großer Risse verhindern.

Bei einem besonderen Ausführungsbeispiel, bei welchem die Haftung des Schleifkorns mit der Kunstharzbindung der Schleifscheibe wesentlich verbessert wird, wird dem Ummantelungsmaterial ein Zuschlag von 0,5 – 1,5 Gew.-%, vorzugsweise 1,1 Gew.-% SiC, bezogen auf die Kornmenge, beigegeben.

Der Effekt dieses Zuschlags ist darin zu sehen, daß sich das SiC bereits bei Temperaturen ab 900°C zersetzt bzw. oxidiert. Der Zersetzungsgrad ist bei den Temperaturen, bei denen erfindungsgemäß das Schleifkorn behandelt wird, nämlich 1250 – 1350°C, optimal. Bei der Zersetzung bildet sich gasförmiges Kohlendioxid bzw. Kohlenmonoxid und SiO bzw. $SiO_2$, wobei die gasförmigen Kohlenstoffoxide in der Schmelze des Ummantelungsmaterials Blasen hervorrufen. Diese Blasen bewirken eine merkliche Verbesserung der Ummantelungsoberfläche und somit eine vergrößerte äußere Haftfläche am Schleifkorn und eine verbesserte Haftfähigkeit des ummantelten Schleifkorns in der Bindungsmasse.

Gemäß der Erfindung werden als Ummantelungsmaterial beispielsweise folgende Substanzen einzeln oder in Mischungen verwendet.

Kaolin
vorteilhaft in
folgender Zusammensetzung

| | |
|---|---|
| Glühverlust | 13,0 Gew.-% |
| $SiO_2$ | 46,6 Gew.-% |
| $Al_2O_3$ | 37,8 Gew.-% |
| $Fe_2O_3$ | 0,6 Gew.-% |
| $K_2O$ | 1,0 Gew.-% |
| $Na_2O$ | 0,2 Gew.-% |
| CaO | 0,3 Gew.-% |
| MgO | 0,2 Gew.-% |
| $TiO_2$ | 0,3 Gew.-% |

Glasfritten,
vorzugsweise in der
Zusammensetzung

| | allgemein |
|---|---|
| $SiO_2$ | 45 – 70 Gew.-% |
| $Al_2O_3$ | 7 – 15 Gew.-% |
| $B_2O_3$ | 0 – 25 Gew.-% |
| MgO | 0 – 3,5 Gew.-% |
| CaO | 0 – 7 Gew.-% |
| $Na_2O$ | 0 – 5 Gew.-% |
| $K_2O$ | 0 – 12 Gew.-% |
| $P_2O_5$ | 0 – 6 Gew.-% |

Ton,
vorteilhaft in folgenden
Zusammensetzungen

| | |
|---|---|
| $SiO_2$ | 63 – 70 Gew.-% |
| $Al_2O_3$ | 25 – 27 Gew.-% |
| $TiO_2$ | 0,6 – 0,7 Gew.-% |
| $Fe_2O_3$ | 0,5 – 0,6 Gew.-% |
| $Na_2O$ | 0,6 – 0,7 Gew.-% |
| $K_2O$ | 0,9 – 1,0 Gew.-% |

Manganoxidhaltige Tone

| | |
|---|---|
| $MnO_2$ | 12 – 15 Gew.-% |
| $SiO_2$ | 25 – 30 Gew.-% |
| $Al_2O_3$ | 14 – 16 Gew.-% |
| $Fe_2O_3$ | 25 – 28 Gew.-% |
| CaO | 0,6 Gew.-% |
| MgO | 0,2 Gew.-% |
| $K_2O$, $Na_2O$ | 2,5 Gew.-% |

Eisenoxidhaltige Tone

| | |
|---|---|
| $SiO_2$ | 58,0 Gew.-% |
| $Al_2O_3$ | 19,8 Gew.-% |
| $Fe_2O_3$ | 8,1 Gew.-% |
| CaO | 0,1 Gew.-% |
| MgO | 0,1 Gew.-% |
| $K_2O$ | 5,3 Gew.-% |
| $Na_2O$ | 3,5 Gew.-% |
| Glühverlust | 4,6 Gew.-% |

Weiters kommen gemäß der Erfindung als Ummantelungsmaterial Phosphate, Borate und Silikate in Betracht, die einzeln oder in Mischung aufgetragen werden.

In der Technologie der Aufbringung des Ummantelungsmaterials auf die Kornoberfläche hat sich erfindungsgemäß eine Anfeuchtung des Schleifkorns als vorteilhaft erwiesen.

Als Anfeuchtmittel werden erfindungsgemäß verwendet:

Wässerige Lösungen von Silikaten, Phosphaten und Boraten, Phosphorsäuren,
Borsäuren,
Kieselsäuren,
Organische Si-Verbindungen, wie z. B. Äthyl- und Methylpolysiloxane.

Wesentlich bei der Wahl der Mantelmaterialien und Anfeuchtmittel ist erfindungsgemäß, daß ein rauher, makroskopisch geschlossener Mantel, der fallweise die erwähnten Mikrorisse enthält, am Schleifkorn erzielt wird und daß es während der Hitzebehandlung trotz der hohen Temperatur zu keiner unerwünschten, starken Kantenkorrision am Schleifkorn kommt, wodurch die Schleifeigenschaften des letzteren wesentlich herabgesetzt werden würden. Dagegen ist eine leichte, oberflächliche Anlösung der Schleifmittelkörner unerläßlich, da nur dadurch die Bildung einer chemischen Übergangsschicht (siehe Abbildung) ermöglicht wird. Dazu dürfen die Anfeuchtmittel nur in entsprechend niedrigen Konzentrationen eingesetzt werden.

Nachstehend werden fünf Ausführungsbeispiele der Erfindung beschrieben.

In der Figur der Zeichnung ist das Schleifkorn nach Ausführungsbeispiel 4 mit 1 (Normalkorund, $Al_2O_3$), eine daran angrenzende Galaxitübergangsschicht $MnAl_2O_4$ mit 2 und eine gesinterte Schicht aus Manganoxid-Körnern 3 in Glasmatrix 4 bezeichnet. Die Übergangsschicht 2 bindet dabei sowohl chemisch als auch mechanisch mit dem Korund 1 und der eigentlichen Überzugsschicht 3. Die durch beispielsweise $ZrO_2$ verursachten Mikrorisse sind mit 5 bezeichnet.

Die Figur der Zeichnung zeigt schematisch einen Schnitt durch den Randbereich eines Schleifkorns.

Ausführungsbeispiel 1:

| | |
|---|---|
| $Al_2$ (Normalkorund) ≈700 µm | 96,5 Gew.-% |
| Anfeuchtmittel, wie erwähnt | 1,0 Gew.-% |
| Kaolin (Korngröße <5 µm) | 1,1 Gew.-% |
| $Al_2O_3$ (Korngröße <10 µm) | 1,4 Gew.-% |

Ausführungsbeispiel 2:

| | |
|---|---|
| $Al_2O_3$ (Normalkorund) ≈700 µm | 96,45 Gew.-% |
| Anfeuchtmittel, wie erwähnt | 1,3 Gew.-% |
| Hochschmelzende Fritte <38 µm | 1,25 Gew.-% |
| $MnO_2$ (Korngröße <10 µm) | 2,0 Gew.-% |

Ausführungsbeispiel 3:

| | |
|---|---|
| $Al_2O_3$ (Normalkorund) ≈700 µm | 95,5 Gew.-% |
| Anfeuchtmittel, wie erwähnt | 1,3 Gew.-% |
| Ton <5 µm | 1,2 Gew.-% |
| $MnO_2$ <10 µm | 2,0 Gew.-% |

Ausführungsbeispiel 4:

| | |
|---|---|
| $Al_2O_3$ (Normalkorund) ≈700 µm | 95,55 Gew.-% |
| Anfeuchtmittel, wie erwähnt | 1,2 Gew.-% |
| Fritte (Korngröße <38 µm) | 1,25 Gew.-% |
| $MnO_2$ (Korngröße <10 µm) | 1,8 Gew.-% |
| $ZrO_2$ (Korngröße <10 µm) | 0,2 Gew.-% |

Ausführungsbeispiel 5:

| | |
|---|---|
| $Al_2O_3$ (Normalkorund) ≈700 µm | 96,8 Gew.-% |
| Anfeuchtmittel, wie erwähnt | 1,0 Gew.-% |
| Kaolin (Korngröße <5 µm) | 1,1 Gew.-% |
| SiC (Korngröße <20 µm) | 1,1 Gew.-% |

Gemäß der Erfindung wird das Schleifkorn vorzugsweise nach vorangegangener Befeuchtung mit dem fein gemahlenen Überzugsmaterial in einem herkömmlichen Mischer vermischt und ummantelt und anschließend in einem Drehrohrofen bei einer Temperatur von 1250° C bis 1350° C gebrannt, wobei die Temperaturbehandlung 2 h nicht überschreiten soll, beispielsweise zwischen 20 und 45 min liegt.

Um den Einfluß der erfindungsgemäßen Behandlung des Schleifkorns auf das Festigkeitsverhalten eines fertigen Schleifkörpers zu ergründen, wurden nach untenstehender Zusammensetzung Prüfkörper gefertigt. Diese waren für die Prüfung der Biegebruch-Spannung mit 120 × 10 × 15 und für die Prüfung der Druckbruch-Spannung mit 10 × 10 × 15 mm dimensioniert und auf eine Preßdichte von $d_0$ = . . . 2,79 verdichtet.

| | |
|---|---|
| Korngröße ≈700 µm | 50 Vol.-% |
| Phenolharz (fest : flüssig = 4 : 6) | 30 Vol.-% |
| Füllstoff (Kryolith) | 15 Vol.-% |
| (Poren) | 5 – 10 Vol.-% |

Die Aushärtung erfolgte bei 190° C über 54 Stunden.

Ebenso wurden in gleicher Zusammensetzung mit unbehandeltem, herkömmlich geglühtem und ummanteltem und erfindungsgemäß behandeltem Normalkorund Probeschleifkörper (Trennscheiben, 400 × 45 × 32 mm) gefertigt und geprüft. Zur Prüfung wurden Baustahlrundprofile Ø 30 mm getrennt. Die Ergebnisse der vorgenommenen Vergleichsprüfung sind der angeschlossenen Tabelle zu entnehmen.

| Korn | Biegebruch-spannung kN/mm² | Druckbruch-spannung kN/mm² | G-Faktor Schleif-verhältnis |
|---|---|---|---|
| Unbehandelter Normalkorund | 5 200 | 13 300 | 3.0 |
| Herkömmlich ummantelt und geglühter Normalkorund | 6 000 | 16 600 | 3.7 |
| Erfindungsgemäß behandelter Normalkorund | 7 100 | 17 300 | 4.1 |

G-Faktor = Verhältnis von getrennter Werkstückquerschnittsfläche zu verbrauchter Scheibenfläche (Scheibenverschleiß).

**Patentansprüche**

1. Verfahren zur Gütebehandlung von Schleifkorn aus $Al_2O_3$ mit einem Anteil von Titanoxid, vorzugsweise $Ti_2O_3$, wobei auf das Schleifkorn eine Ummantelung aus einer keramischen Masse aufgeschmolzen und/oder aufgesintert wird, dadurch gekennzeichnet, daß das Schleifkorn über eine Zeitspanne von 15 min bis 2 h einer Temperatur von 1250 bis 1350° C ausgesetzt wird, wobei das Aufsintern bzw. Aufschmelzen der keramischen Ummantelung gleichzeitig mit der Umwandlung der Ti-Oxide von der 3-wertigen in die 4-wertige Oxidationsstufe und damit mit der Umwandlung der Kornstruktur erfolgt.

2. Verfahren nach Anspruch 1, dadurch gekennzeichnet, daß die Zeitspanne der Temperaturbehandlung zwischen 20 min und 45 min liegt.

3. Verfahren nach Anspruch 1 und/oder 2, dadurch gekennzeichnet, daß als Ummantelungsmaterial Silikate, Ton und/oder hochschmelzende Glasfritten und/oder Borate und/oder Phosphate eingesetzt werden.

4. Verfahren nach Anspruch 3, dadurch gekennzeichnet, daß als Ummantelungsmaterial eisenoxidhaltige und/oder manganoxidhaltige Tone eingesetzt werden.

5. Verfahren nach einem der Ansprüche 1 bis 4, dadurch gekennzeichnet, daß dem Ummantelungsmaterial Metalloxide, vorzugsweise Eisenoxide und/oder Manganoxide und/oder Chromoxide, beigegeben werden.

6. Verfahren nach einem der Ansprüche 1 bis 5, dadurch gekennzeichnet, daß dem Ummantelungsmaterial Substanzen mit hohen Ausdehnungskoeffizienten, wie $ZrO_2$, beigegeben werden.

7. Verfahren nach einem der Ansprüche 1 bis 6, dadurch gekennzeichnet, daß als Ummantelungsmaterial Kaolin eingesetzt wird.

8. Verfahren nach einem der Ansprüche 1 bis 7, dadurch gekennzeichnet, daß das Schleifkorn vor dem Ummanteln mit einer wässerigen Lösung von Boraten angefeuchtet wird.

9. Verfahren nach einem der Ansprüche 1 bis 7, dadurch gekennzeichnet, daß das Schleifkorn vor dem Ummanteln mit einer Phosphor-, Bor- oder Kieselsäure angefeuchtet wird.

10. Verfahren nach einem der Ansprüche 1 bis 7, dadurch gekennzeichnet, daß das Schleifkorn vor dem Ummanteln mit einer organischen Si-Verbindung angefeuchtet wird.

11. Verfahren nach einem der Ansprüche 1 bis 10, dadurch gekennzeichnet, daß dem Ummantelungsmaterial ein Zuschlag von 0,5—1,5 Gew.-% SiC, bezogen auf die Kornmenge, beigegeben wird.

## Claims

1. A method of improving abrasive grains of $Al_2O_3$ containing a proportion of titanium oxide, advantageously $Ti_2O_3$, wherein a ceramic coating is fused and/or sintered onto the grains, characterized in that the grain is exposed to a temperature of from 1250° to 1350° over a period of from 15 minutes to 2 h, whereby the ceramic coating is fused or sintered onto the grain simultaneously with a change of the titanium oxide from the trivalent to the quadrivalent oxidation state and therefore simultaneously with the change of structure of the grain.

2. A method according to claim 1, characterized in that the heat treatment is carried out over a period of between 20 minutes and 45 minutes.

3. A method according to claim 1 and/or 2, characterized in that as the coating material silicates, clay and/or high melting glasfrits and/or borates and/or phosphates are used.

4. A method according to claim 3, characterized in that as the coating material clay containing ferric oxide and/or manganese oxide is used.

5. A method according to one of claims 1 to 4, characterized in that the metallic oxides, preferably ferric oxide and/or manganese oxide and/or chromium oxide, are added to the coating material.

6. A method according to one of claims 1 to 5, characterized in that the materials having a high coefficient of expansion, such as $ZrO_2$, are added to the coating material.

7. A method according to one of claims 1 to 6, characterized in that kaolin is used as a coating material.

8. A method according to one of claims 1 to 7, characterized in that, prior to the coating process the grain is moistened by means of an aqueous solution of borates.

9. A method according to one of claims 1 to 7, characterized in that prior to the coating process the grain is moistened by means of a phosphoric acid, boric acid or silicic acid.

10. A method according to one of claims 1 to 7, characterized in that prior to the coating process the grain is moistened by means of an organic Si-compound.

11. A method according to one of claims 1 to 10, characterized in that 0,5—1,5 weight percent of SiC, referred to the amount of abrasive grain, are added to the coating material.

## Revendications

1. Procédé pour le traitement qualitatif de grains abrasifs en $Al_2O_3$ avec une certaine proportion d'oxydes de titane, de préférence $Ti_2O_3$, dans lequel on applique sur le grain abrasif, par fusion et/ou frittage, un enrobage d'une masse céramique, caractérisé en ce que l'on expose le grain abrasif pendant une durée en ce que l'on expose le grain abrasif pendant une durée de 15 mn à 2 heures à une température de 1.250 à 1.350°C, en réalisant simultanément l'application par frittage ou fusion de l'enrobage céramique et le passage des oxydes de Ti du stade de valence d'oxydation 3 au stade de valence d'oxydation 4 et, par conséquent, la transformation de la structure du grain.

2. Procédé selon la revendication 1, caractérisé en ce que la durée du traitement à haute température

va de 20 mn à 45 mn.

3. Procédé selon les revendications 1 et/ou 2, caractérisé en ce que l'on utilise en tant que matières d'enrobage des silicates, de l'argile et/ou des frittes de verre à haut point de fusion et/ou des borates et/ou des phosphates.

4. Procédé selon la revendication 3, caractérisé en ce que l'on utilise en tant que matières d'enrobage des argiles contenant de l'oxyde de fer et/ou de l'oxyde de manganèse.

5. Procédé selon l'une des revendications 1 à 4, caractérisé en ce que l'on mélange à la matière d'enrobage des oxydes métalliques, de préférence des oxydes de fer et/ou des oxydes de manganèse et/ou des oxydes de chrome.

6. Procédé selon l'une des revendications 1 à 5, caractérisé en ce que l'on mélange à la matière d'enrobage des substances à haut coefficient de dilatation, par exemple $ZrO_2$.

7. Procédé selon l'une des revendications 1 à 6, caractérisé en ce que l'on utilise en tant que matière d'enrobage le kaolin.

8. Procédé selon l'une des revendications 1 à 7, caractérisé en ce que, avant l'enrobage, on humidifie le grain abrasif par une solution aqueuse de borate.

9. Procédé selon l'une des revendications 1 à 7, caractérisé en ce que, avant l'enrobage, on humidifie le grain abrasif par un acide phosphorique, borique ou silicique.

10. Procédé selon l'une des revendications 1 à 7, caractérisé en ce que, avant l'enrobage, on humidifie le grain abrasif par un composé organique du silicium.

11. Procédé selon l'une des revendications 1 à 10, caractérisé en ce que l'on mélange à la matière d'enrobage une adjonction de 0,5 à 1,5% en poids de SiC, par rapport à la quantité de grains.

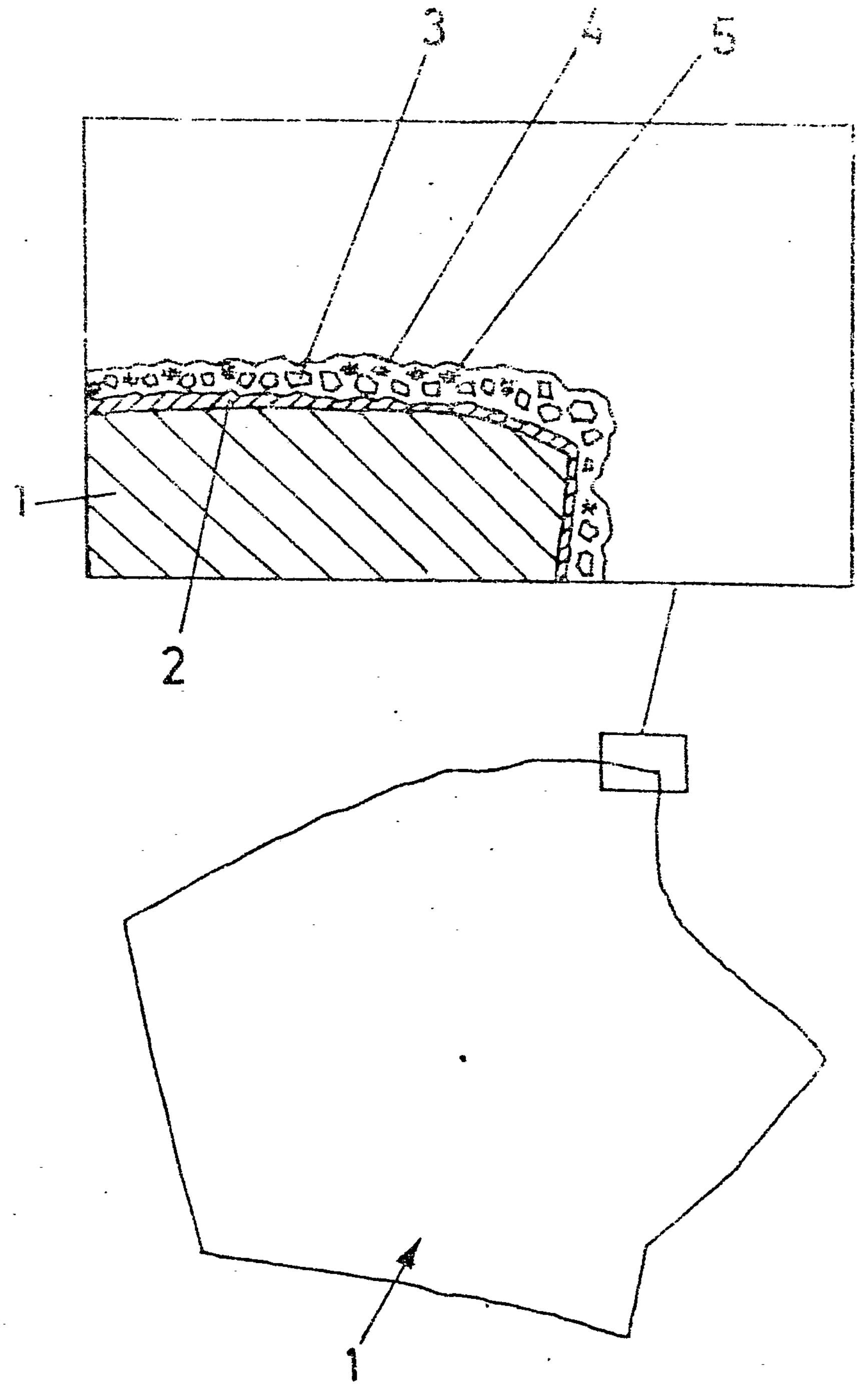
3
4
5
1
2
1